# EUROPEAN PATENT APPLICATION

(11) **EP 1 897 464 A1**
(43) Date of publication of application: **12.03.2008**
(21) Application number: 07113183.3
(22) Date of filing: 26.07.2007
(51) Int. Cl.: A45F 4/02

(54) **Bag for pushchair or the like, also usable as a backpack or shoulder bag**

(30) Priority: 07.09.2006 IT MI20060317 U
(71) Applicant: ARTSANA S.p.A., 22070 Grandate (Como) (IT)
(72) Inventor: Mancuso, Valentina, 20069, Vaprio d'Adda (Milano) (IT)
(74) Representative: Ripamonti, Enrico

(57) **Abstract**

A bag (1) acting as a basket in a pushchair, perambulator or similar child transport means (10), said means (10) having a frame (12) carrying a child support portion (11), said bag (1) being arranged to be coupled to a part of said frame (12) below said portion (11), the bag (1) having a body (2) of preferably yieldable material provided with opposing ends (3,4) and lateral parts (5,6) defining the sides of the bag (1) and bounding a central portion (7) defining a recessed part for containing articles when the bag is used in said transport means (10). The body (2) is defined by two superposed portions (20,21) connected together on three sides (4,5,6) of said body (2), on a fourth side (3) said portions (20,21) being separable so as to define an aperture (25) for access to an internal bag compartment (22) defined by the two superposed portions (20,21), there being present, on those opposing sides (5,6) adjacent to the side (3) provided with the aperture (25), support elements (30) which can be distanced from the body (2) of the bag (1) to enable this latter to be used as a backpack or shoulder bag.

## Description

The present invention relates to a bag for a pushchair, perambulator or other child transport means, in accordance with the introduction to the main claim.

With particular but not exclusive reference to pushchairs, these are known to present bar positioned below the child support portion and fixed to pushchair the frame. This bag acts as a basket for transporting articles together with the child (toys, articles used to care for and feed the child, clothing. etc.) and is usually of yieldable material, especially if the pushchair is of foldable type.

This bag or basket comprises a usually quadrangular body having opposing ends and lateral parts defining the sides of the bag and bounding a central portion defining a recessed part for containing the articles. At the corners of this body, usual coupling elements, preferable separable, enable the bag to be fixed to the frame of the pushchair.

An object of the present invention is to provide a bag or basket of the stated type which can also be used as a shoulder bag or backpack, when separated from the frame of the transport means.

A particular object of the invention is to provide a bag of the stated type easy to use whether associated with said frame or as a backpack or shoulder bag.

Another object is to provide a bag of the stated type which is of simple production. These and further objects which will be apparent to the expert of the art are attained by a bag in accordance with the accompanying claims.

The present invention will be apparent from the accompanying drawings, in which:
Figure 1 is a side view of a bag according to the invention used on a pushchair;
Figure 2 is a perspective view of the bag in the utilization position shown in Figure 1;
Figure 3 is a view of the bag of Figure 2 from above;
Figure 4 is a view of the bag of Figure 1 from above, seen at the moment of its transformation for use as a backpack or shoulder bag; and
Figure 5 is a perspective view of the bag when used as a backpack or shoulder bag.

With reference to said figures, a bag is indicated overall by 1 and comprises a body 2 of yieldable material, opposing ends 3 and 4 and lateral parts 5 and 6 defining the sides of the body 2. Between these latter a central portion 7 is present defining a recessed part for containing articles when the bag is used as a basket in a pushchair 10. In known manner this latter comprises a child support portion 11 associated with (and supported by) a frame 12 provided with wheels 13.

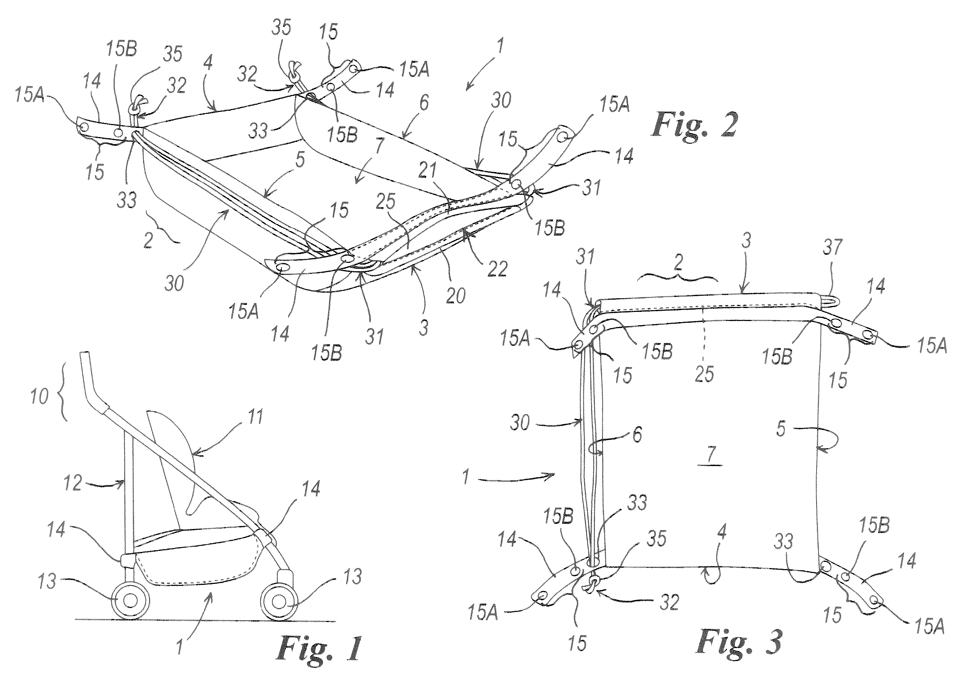

The bag 1 is of substantially quadrangular plan (Figure 2), and at its corners presents tabs 14 provided with press studs 15 (in two parts 15A and 15B) to enable the bag to be removably fixed to the frame 12 of the pushchair 10.

The said press studs, which are known per se, can evidently be replaced by other known elements for coupling the bag to said frame 12.

According to the invention, the body 2 of the bag 1 is formed by superposing (at least partially, preferably totally,) two portions 20 and 21, which are joined together along three (4, 5, 6) of the four sides of said body; the superposed portions 20, 21 hence define an internal compartment 22 of the bag 1 which can be accessed via the fourth side 3 of said body 2, in which side the two portions are separated and an aperture 25 is hence provided in the bag 1.

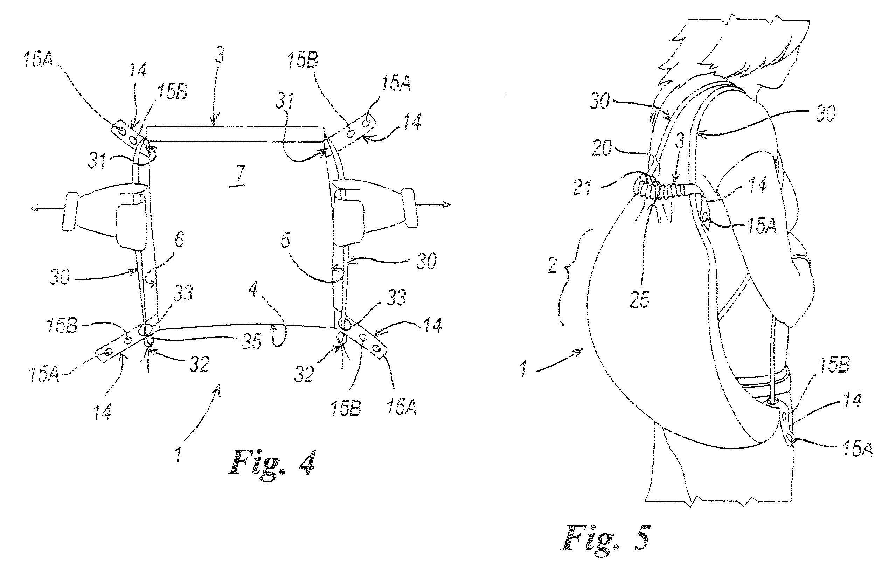

At the aperture 25 closure means are advantageously provided such as buttons, of press stud or other type, pull-away fasteners, or simply a tape or cord fastener which gathers the sides of the aperture 25 to group them together and hence close it (as shown in Figure 5).

Elongate pieces 30 are also present along the opposing lateral parts or sides 5 and 6 of the body 2, to act as shoulder straps for using the bag 1 as a backpack or shoulder bag (Figure 5). These elongate pieces 30 can be filiform elements such as cords or ropes (of fabric or synthetic material) or can be flat elements (ribbon-like) also of fabric or synthetic material, to act as actual shoulder straps.

The elongate pieces 30 have their opposing ends 31 and 32 connected to the body 2, either directly or via the coupling elements (in the example, the tabs 14). This connection can be of fixed or slidable type, as in Figure 2 in which it is achieved by inserting the ends 32 of the elongate pieces 30 through holes 33 in a pair of corresponding tabs 14 and forming the end 32 of said pieces such that it does not separate from said tabs (in the example, by means of knots 35). The other end 31 is connected to the body 2, for example by passing each piece 30 through a ring 37 on the bag.

By virtue of the invention, the bag 1 can be used as a basket in a pushchair (or similar child transport means, such as a perambulator), of the known umbrella- or book-foldable type, by being coupled to the pushchair frame 12 by the said coupling elements 14. Alternatively, after separating the bag from this latter, it can be sued as a backpack or shoulder bag. To achieve this, the user grips the elongate pieces 30, as shown in Figure 4, distances them from the body 2 and positions the bag on the shoulder or shoulders (Figure 5); articles can be inserted into the bag through the aperture 25, said aperture then being closed by the aforesaid closure means.

The invention allows considerable freedom to the user in using the bag, and in particular enables articles necessary and/or useful for caring for, feeding or amusing the child to be transported by means of a single element or container, both when the child is positioned in the pushchair (or similar transport means) and when the child is removed therefrom. This can be of considerable use in all those cases in which the pushchair cannot be used or in cases in which the use of the transport means must be interrupted (for example to enter a transport vehicle such as a train or boat), to be then resumed.

A specific embodiment of the invention has been described; however, on the basis of the suggestions given in the preceding description, other embodiments are possible, these also to be considered as falling within the scope of the accompanying claims.

## Claims

1. A bag (1) acting as a basket in a pushchair, perambulator or similar child transport means (10), said means (10) having a frame (12) carrying a child support portion (11), said bag (1) being arranged to be coupled to a part of said frame (12) below said portion (11), the bag (1) having a body (2) of preferably yieldable material provided with opposing ends (3, 4) an d lateral parts (5, 6) defining the sides of the bag (1) and bounding a central portion (7) defining a recessed part for containing articles when the bag is used in said transport means (10), **characterised in that** said body (2) is defined by two superposed portions (20, 21) connected together on three sides (4, 5, 6) of said body (2), on a fourth side (3) said portions (20, 21) being separable so as to define an aperture (25) for access to an internal bag compartment (22) defined by the two superposed portions (20, 21), there being present, on those opposing sides (5, 6) adjacent to the side (3) provided with the aperture (25), support elements (30) which can be distanced from the body (2) of the bag (1) to enable this latter to be sued as a backpack or shoulder bag.

2. A bag as claimed in claim 1, **characterised in that** the two portions (20, 21) of the body (2) are completely superposed and define an internal compartment (22) which involves the entire body (2) of the bag (1).

3. A bag as claimed in claim 1, **characterised in that** the aperture (25) for access to its internal compartment (22) is provided with closure means.

4. A bag as claimed in claim 3, **characterised in that** the closure means for the aperture (22) are a pull-away tape.

5. A bag as claimed in claim 3, **characterised in that** the closure means for the aperture (22) are buttons.

6. A bag as claimed in claim 3, **characterised in that** the closure means for the aperture (22) are a tape or cord.

7. A bag as claimed in claim 1, **characterised in that** each support element (30) is ribbon-like.

8. A bag as claimed in claim 1, **characterised in that** each support element (30) is filiform.

9. A bag as claimed in claim 1, **characterised in that** each support element (30) comprises two opposing ends (31, 32), at least one of said ends being permanently connected to the bag body (2).

10. A bag as claimed in claim 1, **characterised in that** each support element (30) comprises two opposing ends (31, 32) slidably connected to the bag body (2).
